# EUROPÄISCHE PATENTSCHRIFT

(11) **EP 3 894 105 B1**
(45) Veröffentlichungstag und Bekanntmachung des Hinweises auf die Patenterteilung: **29.05.2024**
(21) Anmeldenummer: 19809707.3
(22) Anmeldetag: 08.11.2019
(51) Int. Cl.: B21H 3/02, B21H 3/08, F16H 25/22

(54) **VERFAHREN ZUR HERSTELLUNG EINER KUGELLAUFBAHN AN EINER INNENUMFANGSFLÄCHE EINES WERKSTÜCKS**
METHOD FOR PRODUCING A BALL RACE ON THE INTERIOR AREA OF A WORKPIECE
PROCÉDÉ POUR LA PRÉPARATION D'UNE PISTE DE ROULEMENT À BILLES À LA SURFACE INTÉRIEURE D'UNE PIÈCE

(30) Priorität: 10.12.2018 DE 102018131508
(43) Veröffentlichungstag der Anmeldung: 20.10.2021
(73) Patentinhaber: Schaeffler Technologies AG & Co. KG, 91074 Herzogenaurach (DE)
(72) Erfinder: BUSCHKA, Martin, 91074 Herzogenaurach (DE); GESCHWINDNER, Peter, 91052 Erlangen (DE)
(86) Internationale Anmeldenummer: PCT/DE2019/100965
(87) Internationale Veröffentlichungsnummer: WO 2020/119849

(56) Entgegenhaltungen:
- EP-A2- 0 985 470
- JP-A- H07 251 230

## Beschreibung

Die Erfindung betrifft ein Verfahren zur Herstellung einer Kugellaufbahn an einer Innenumfangsfläche eines Werkstücks.

Aus der DE 10 2014 225 104 A1 geht ein Verfahren zur Herstellung einer Lenkzahnstange hervor, die einen Verzahnungsabschnitt mit einer Lenkverzahnung und einen Spindelabschnitt mit einer Kugelumlaufspindel aufweist. Zunächst wird ein stangenartiger Rohling aus einem massiven Metallmaterial bereitgestellt. Der Spindelabschnitt wird durch einseitiges Tieflochbohren ausgehöhlt, wobei eine tiefe, den Spindelabschnitt axial hindurch ragende Sacklochbohrung erzeugt wird. Nachfolgend wird die Kugelumlaufspindel am hohlen Spindelabschnitt durch spanende Bearbeitung hergestellt.

Die JP H07 251 230 A beschreibt ein Verfahren und eine Vorrichtung zur Herstellung einer Kugelgewindespindel. Dabei wird nach einer spanenden Vorbearbeitung einer langgestreckten Welle aus Stahl zur Ausbildung einer Grobgewindestruktur ein Rollwalzvorgang durchgeführt. Dazu werden zwei sich gegenüberliegende Walzen mit jeweils einem umlaufenden Walzprofil gegen die Grobgewindestruktur außen an der Welle gedrückt und das Kugelgewinde ausgebildet.

Die EP 0 985 470 A2, welche die Basis für den Oberbegriff des Anspruchs 1 bildet, offenbart eine Kugelgewindemutter und ein Verfahren zu deren Herstellung. An einer Innenumfangsfläche des Bauteils wird das Kugelgewinde entweder unmittelbar in der Enddimension eingeformt oder durch spanende Bearbeitung vorgeformt und danach durch einen Umformvorfang in der Enddimension eingeformt. Dabei kommt ein Werkzeug zum Einsatz, das ein spiralförmig über einen langestreckten Schaft angeordnetes Walzprofil aufweist.

Die Aufgabe der vorliegenden Erfindung besteht darin, ein Verfahren zur Herstellung einer Kugellaufbahn für ein Werkstück, insbesondere für eine Kugelgewindemutter weiterzuentwickeln. Die Aufgabe wird gelöst durch den Gegenstand des Patentanspruchs 1. Bevorzugte Ausführungsformen sind den abhängigen Ansprüchen, der Beschreibung und den Figuren zu entnehmen.

In einem erfindungsgemäßen Verfahren zur Herstellung einer Kugellaufbahn an einer Innenumfangsfläche eines Werkstücks wird am Werkstück ein vorläufiges Gewindeprofil mit einer ersten Laufbahngeometrie mittels eines spanenden Fertigungsverfahrens ausgebildet, wobei das vorläufige Gewindeprofil zur Nachbearbeitung und Ausbildung eines finalen Gewindeprofils vorgesehen ist, wobei das Werkstück nach der spanenden Bearbeitung in ein Gewindewalzwerkzeug mit einem Werkzeugschaft eingespannt wird, wobei der Werkzeugschaft eine Längsachse L2 aufweist und an einem freien Ende des Werkzeugschaftes ein Werkzeugkopf mit einem Walzprofil ausgebildet ist, das eine die Längsachse L2 ringförmig umlaufende Walzprofilgeometrie aufweist, wobei das Werkstück um eine Rotationsachse in eine Drehbewegung versetzt und der Werkzeugschaft entlang der Innenumfangsfläche des Werkstücks longitudinal verlagert und durch das Werkstück hindurch geführt wird, wobei das Walzprofil des Werkzeugkopfes zur Erzeugung des finalen Gewindeprofils am Werkstück mit einer zweiten Laufbahngeometrie am vorläufigen Gewindeprofil abwälzt.

Mit anderen Worten wird aus dem vorläufigen Gewindeprofil das finale Gewindeprofil ausgebildet, indem das Walzprofil einfach oder mehrfach entlang des vorläufigen Gewindeprofils geführt wird. Durch das Abrollen bzw. Abwälzen des Walzprofils entlang des vorläufigen Gewindeprofils kommt es zu plastischer Verformung an der Oberfläche des vorläufigen Gewindeprofils, wobei insbesondere Rauigkeitsspitzen an der Oberfläche des vorläufigen Gewindeprofils eingeglättet werden. Durch das Nachbearbeiten bzw. Einglätten von Rauigkeitsspitzen wird somit die Oberfläche des vorläufigen Gewindeprofils nachbearbeitet, um dadurch das finale Gewindeprofil auszubilden. Das finale Gewindeprofil entspricht dann einer Endkontur der Kugellaufbahn des Werkstücks.

Das vorläufige Gewindeprofil weist eine vorläufige Laufbahnqualität der Kugellaufbahn auf, die neben dem spanenden Fertigungsverfahren auch mittels anderer alternativer Verfahren hergestellt werden kann. Vorteilhaft ist dabei, dass zur Herstellung des vorläufigen Gewindeprofils größere Toleranzen einzuhalten sind, womit das vorläufige Gewindeprofil insbesondere kostengünstig herstellbar ist. Durch das Gewindewalzen mittels des Walzprofils wird nachfolgend die Endkontur der Kugellaufbahn an einer Innenumfangsfläche des Werkstücks hergestellt. Da zu diesem Zeitpunkt bereits ein Großteil des Materials des Werkstücks durch das spanende Fertigungsverfahren entfernt wurde, hat lediglich eine Nachbearbeitung bzw. finale Bearbeitung zur Erstellung der Endqualität der Kugellaufbahn zu erfolgen.

Vorzugsweise weist das Walzprofil eine korrespondierend zur zweiten Laufbahngeometrie ausgebildete Walzprofilgeometrie auf. Mit anderen Worten ist das Walzprofil als Negativprofil der fertigen Kugellaufbahn zu verstehen, mit dessen Hilfe das finale Gewindeprofil erzeugt wird. Vorteilhaft ist dabei, dass das Gewindewalzwerkzeug keine hohen Drehmomente zur Erzeugung des finalen Gewindeprofils aufbringen muss, da das vorläufige Gewindeprofil bereits erstellt wurde und das Walzprofil lediglich entlang dieser vorbearbeiteten Kugellaufbahn abrollt, um das finale Gewindeprofil herzustellen.

Ferner bevorzugt wird das vorläufige Gewindeprofil mit einer Gewindesteigung ausgebildet, wobei das Walzprofil bezogen auf die Rotationsachse des Werkstücks analog zur Gewindesteigung geneigt ausgerichtet wird. Mit anderen Worten weist das Walzprofil eine Längsachse auf, die bezogen auf die Rotationsachse des Werkstücks derart geneigt angeordnet ist, dass das Walzprofil entlang des vorläufigen Gewindeprofils abrollen kann. Somit entspricht der Winkel, mit dem das Walzprofil mit dessen Längsachse relativ zur Rotationsachse des Werkstücks geneigt ist, der Gewindesteigung des Gewindeprofils.

Bevorzugt wird das Werkstück nach der Entnahme aus dem Gewindewalzwerkzeug gehärtet. Damit wird insbesondere die Widerstandsfähigkeit der Kugellaufbahn durch gezielte Änderung und Umwandlung des Gefüges des Werkstücks erhöht. Eine weitere formgebende Bearbeitung ist dabei nicht vorgesehen. Es ist denkbar, dass durch manuelles Anpassen der Gewindesteigung des Gewindeprofils ein geometrischer Verzug des Werkstücks infolge des Härtens vorgehalten werden kann. Mit anderen Worten ist der Werkzeugschaft mit einem Längsausgleich ausgestattet, mittels dessen ein Verzug des Werkstücks durch Anpassen der Gewindesteigung ausgeglichen werden kann.

Gemäß einem ersten Ausführungsbeispiel wird der Werkzeugschaft parallel zur Rotationsachse des Werkstücks ausgerichtet. Anders gesagt ist die Längsachse des Walzprofils auch bezogen auf eine Längsachse des Werkzeugschafts geneigt angeordnet.

Alternativ wird nach einem zweiten Ausführungsbeispiel der Werkzeugschaft bezogen auf die Rotationsachse des Werkstücks geneigt ausgerichtet. In diesem Fall ist vorteilhaft die Längsachse des Werkzeugschafts sowie die Längsachse des Walzprofils im Wesentlichen koaxial zueinander anzuordnen, wobei somit der Werkzeugschaft und das Walzprofil gemeinsam um den gleichen Winkel bezogen auf die Rotationsachse des Werkstücks geneigt sind. Dies vereinfacht insbesondere die Herstellung des Werkzeugschafts.

Ferner alternativ können sowohl das Wälzprofil als auch der Werkzeugschaft mit ihren Längsachsen koaxial sowie parallel zur Rotationsachse des Werkstücks ausgerichtet sein. In diesem Fall weist das Walzprofil eine verzerrte Walzgeometrie auf. Mit anderen Worten ist das Walzprofil derart ausgebildet, dass das Walzprofil bei der Rotation des Werkstücks und gleichzeitiger axialer Verlagerung des Werkzeugschafts am vorläufigen Gewindeprofil sowohl abrollt als auch abgleitet, um das finale Gewindeprofil auszubilden. Die Oberfläche des vorläufigen Gewindeprofils wird somit durch das Walzprofil sozusagen teilweise durch Abschleifen und teilweise durch Abwälzen eingeglättet, bis das finale Gewindeprofil mit der zweiten Laufbahngeometrie ausgebildet ist.

In allen drei Fällen wird der Werkzeugschaft zur Ausbildung des finalen Gewindeprofils parallel zur Rotationsachse des Werkstücks verlagert, während das Werkstück um die Rotationsachse dreht.

Vorzugsweise wird der Werkzeugschaft mit einer Anpresskraft in Richtung des vorläufigen Gewindeprofils gedrückt. Mithin ist das Werkstück in dessen Lage fixiert und lediglich um die eigene Rotationsachse drehbar. Dadurch wird das finale Gewindeprofil gleichmäßig am Werkstück ausgebildet. Die Anpresskraft ist alternativ oder ergänzend über eine Federkraft einstellbar.

Bevorzugt ist die Walzprofilgeometrie halbkreisförmig oder zumindest teilweise in Form eines gotischen Profils ausgebildet, mit dem das finale Gewindeprofil am Werkstück erzeugt wird. Damit ist das finale Gewindeprofil an die Anforderungen des Werkstücks, wie beispielsweise an die auftretenden Lasten oder Kontaktbereiche anpassbar. Kontaktbereiche sind die Bereiche der Kugellaufbahn, die im Betrieb in Kontakt mit darüber abrollenden Wälzkörpern treten.

Eine derart hergestellte Kugellaufbahn kann beispielsweise in einer Kugelgewindemutter für einen Kugelgewindetrieb vorgesehen werden, wobei die Kugellaufbahn an einer Innenumfangsfläche der Kugelgewindemutter ausgebildet ist. Die Kugellaufbahn weist dabei das finale Gewindeprofil mit einer Gewindesteigung auf.

Während der Ausbildung des finalen Gewindeprofils wird das Werkstück im Bereich des vorläufigen Gewindeprofils eingeglättet. Dabei wird die erste Laufbahngeometrie des vorläufigen Gewindeprofils bis zur zweiten Laufbahngeometrie des finalen Gewindeprofils radial aufgeweitet bzw. vergrößert. Das radiale Aufweiten bzw. Vergrößern des Gewindeprofils erfolgt lediglich geringfügig, vorzugsweise im Mikrometerbereich. Anders gesagt weist das Walzprofil des Werkzeugkopfes einen größeren Außendurchmesser auf als der Innendurchmesser des vorläufigen Gewindeprofils. Die Differenz zwischen dem halben Außendurchmesser, also dem Radius des Walzprofils und dem halben Innendurchmesser, also dem Radius des vorläufigen Gewindeprofils wird als Einglätttiefe bezeichnet. Die Dicke der Einglätttiefe hängt davon ab, mit welcher Geometrie das vorläufige Gewindeprofil und mit welcher Geometrie demgegenüber das nachträglich aus dem vorläufigen Gewindeprofil erzeugte finale Gewindeprofil ausgebildet wird. Ferner hängt die Dicke der Einglätttiefe davon ab, mit welcher Oberflächenqualität das vorläufige Gewindeprofil hergestellt wurde und wie demnach die Rauigkeitsspitzen vor ihrer plastischen Verformung ausgebildet sind. Demnach ist denkbar, dass die Einglätttiefe konstant oder variabel ausgebildet ist. Bei einer variablen Einglätttiefe können Anforderungen des Kugelgewindetriebs, wie beispielsweise die Hertz'sche Pressung berücksichtigt werden. Je höher die Einglätttiefe ist, desto größer ist die plastische Verformung während der Ausbildung des finalen Gewindeprofils und desto größer ist die Verfestigung des Werkstücks in diesem Bereich. Alternativ ist auch eine teilweise konstante und teilweise variable Einglätttiefe denkbar. In diesem Fall ist die Einglätttiefe kontaktwinkeloptimiert ausgeführt. Mithin weist die Kugellaufbahn in den Kontaktbereichen aufgrund der größeren plastischen Verformung eine höhere Festigkeit gegenüber mechanischen Beanspruchungen auf.

Weitere die Erfindung verbessernde Maßnahmen werden nachstehend gemeinsam mit der Beschreibung von drei bevorzugten Ausführungsbeispielen der Erfindung anhand der Figuren näher dargestellt, wobei gleiche oder ähnliche Bauteile mit dem gleichen Bezugszeichen versehen sind. Dabei zeigt
- Figur 1: eine schematische Längsschnittansicht einer Kugelgewindemutter sowie eines Werkzeugschaftes eines Gewindewalzwerkzeugs nach einem ersten Ausführungsbeispiel,
- Figur 2: eine schematische Längsschnittansicht der Kugelgewindemutter mit dem Werkzeugschaft nach einem zweiten Ausführungsbeispiel,
- Figur 3: eine schematische Längsschnittansicht der Kugelgewindemutter mit dem Werkzeugschaft nach einem zweiten Ausführungsbeispiel,
- Figur 4a: eine schematische Schnittansicht eines teilweise dargestellten Walzprofils des Werkzeugschaftes gemäß Figur 2,
- Figur 4b: eine schematische Schnittansicht einer alternativen Ausführungsform des teilweise dargestellten Walzprofils,
- Figur 5a: eine schematische Teilschnittansicht eines Werkstücks vor einer Ausbildung eines finalen Gewindeprofils gemäß der ersten Ausführungsform,
- Figur 5b: eine schematische Teilschnittansicht einer ersten Alternative des Werkstücks vor der Ausbildung des finalen Gewindeprofils, und
- Figur 5c: eine schematische Teilschnittansicht einer zweiten Alternative des Werkstücks vor einer Ausbildung eines finalen Gewindeprofils.

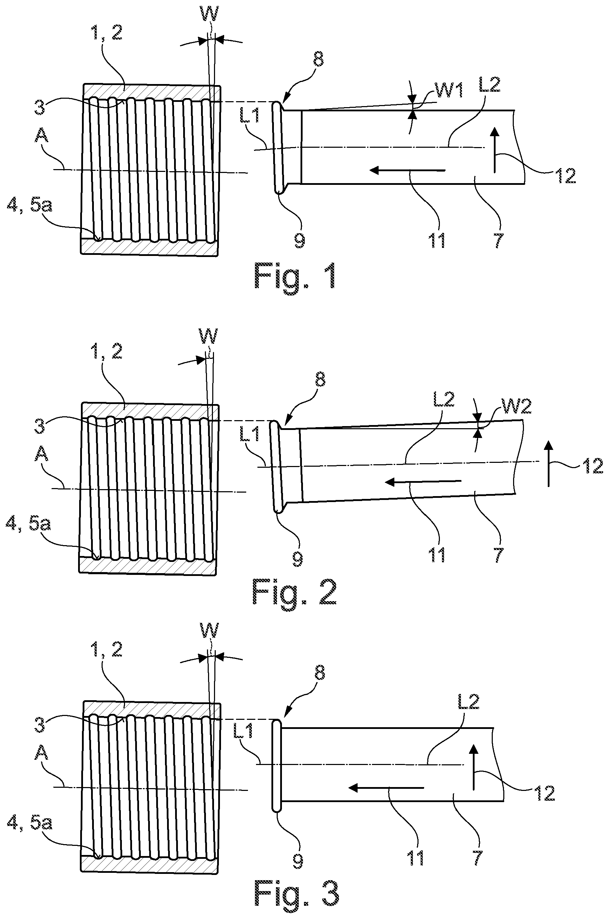

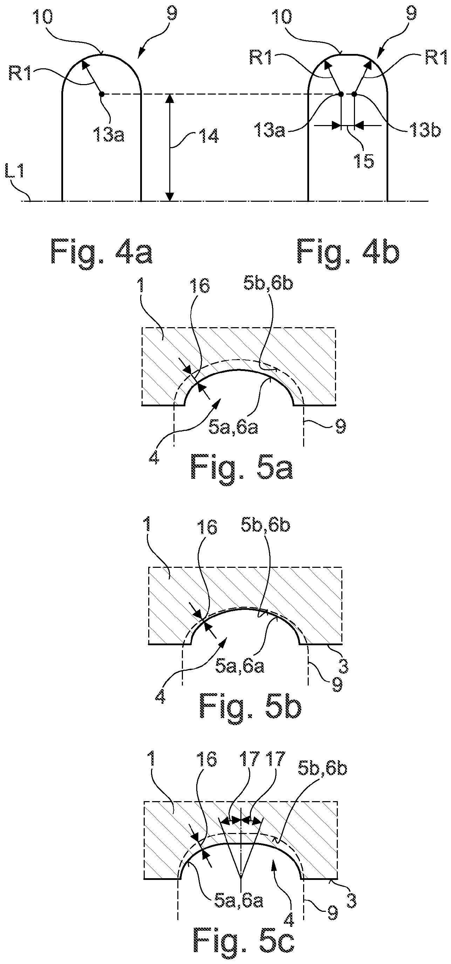

Gemäß den Figuren 1 bis 3 sind drei Ausführungsbeispiele eines - hier nicht dargestellten - Gewindewalzwerkzeugs dargestellt. Das Gewindewalzwerkzeug weist einen Werkzeugschaft 7 auf, an dessen freiem Ende ein Werkzeugkopf 8 mit einem Walzprofil 9 ausgebildet ist. Mittels des Walzprofils 9 wird durch ein Verfahren zur Herstellung einer Kugellaufbahn 4 an einem Werkstück 2 vorliegend eine Kugellaufbahn 4 an einer hülsenförmigen Kugelgewindemutter 1 hergestellt. In einem ersten Verfahrensschritt wird zunächst am Werkstück 2 mittels eines spanenden Fertigungsverfahrens ein vorläufiges Gewindeprofil 5a ausgebildet, wobei das vorläufige Gewindeprofil 5a, welches in Figuren 1 bis 3 an einer Innenumfangsfläche 3 der Kugelgewindemutter 1 angeordnet und zur Nachbearbeitung und Ausbildung eines finalen Gewindeprofils 5b vorgesehen ist. Das vorläufige Gewindeprofil 5a weist eine Gewindesteigung W auf. Die Ausbildung des finalen Gewindeprofils 5b wird nachfolgend insbesondere anhand der Figuren 5a bis 5c näher beschrieben.

Nach der spanenden Bearbeitung wird das Werkstück 2 in das Gewindewalzwerkzeug mit dem Werkzeugschaft 7 eingespannt, wobei das Werkstück 2 in einem zweiten Verfahrensschritt um eine Rotationsachse A in eine Drehbewegung versetzt und der Werkzeugschaft 7 entlang des Werkstücks 2 in einer ersten Verlagerungsrichtung 11 longitudinal verlagert und durch die Kugelgewindemutter 1 hindurch geführt wird. Dabei wird aus dem vorläufigen Gewindeprofil 5a das finale Gewindeprofil 5b erzeugt, indem das Walzprofil 9 des Werkzeugkopfes 8 am vorläufigen Gewindeprofil 5a einfach oder mehrfach abwälzt. Nach der Ausbildung des finalen Gewindeprofils 5b wird das Werkstück 2 aus dem Gewindewalzwerkzeug entnommen und kann anschließend optional gehärtet werden.

Vorzugsweise wird der Werkzeugschaft 7 mit einer Anpresskraft in Richtung des vorläufigen Gewindeprofils 5a gedrückt. Damit werden eine gleichmäßige Krafteinleitung zur gleichmäßigen und maßgenauen Ausbildung des finalen Gewindeprofils 5b gewährleistet.

Nach den Figuren 1 und 2 ist das Walzprofil 9 bezogen auf die Rotationsachse A des Werkstücks 2 analog zur Gewindesteigung W geneigt ausgerichtet. Mithin weist das Walzprofil 9 eine Längsachse L1 auf, die um einen Winkel W1, der dem Winkel der Gewindesteigung W der Kugellaufbahn 4 entspricht, geneigt ist.

Der einzige Unterschied zwischen den beiden Ausführungsformen nach den Figuren 1 und 2 besteht darin, dass gemäß Figur 1 der Werkzeugschaft 7 parallel zur Rotationsachse A des Werkstücks 2 ausgerichtet ist. Somit ist das Walzprofil 9 auch gegenüber einer Längsachse L2 des Werkzeugschaftes 7 um den Winkel W1 bzw. den Winkel der Gewindesteigung W geneigt. Demgegenüber ist nach Figur 2 der Werkzeugschaft 7 mit dessen Längsachse L2 koaxial zur Längsachse L1 des Walzprofils 9 ausgerichtet, sodass der Werkzeugschaft 7 gemeinsam mit dem Werkzeugkopf 8 und dem Walzprofil 9 bezogen auf die Rotationsachse A um einen Winkel W2, welcher ebenfalls dem Winkel der Gewindesteigung W der Kugellaufbahn 4 entspricht, geneigt ist.

Gemäß Figur 3 sind sowohl der Werkzeugschaft 7 als auch das Walzprofil 9 mit ihren Längsachsen L1 und L2 koaxial und parallel zur Rotationsachse A des Werkstücks 2 ausgerichtet. Das Walzprofil 9 ist dabei derart verzerrt ausgebildet, dass das Walzprofil 9 zur Ausbildung des finalen Gewindeprofils 5b über das vorläufige Gewindeprofil 5a sowohl abwälzt als auch abgleitet.

In den Figuren 4a und 4b sind zwei mögliche Ausgestaltungsformen des Walzprofils 9 dargestellt. Das Walzprofil 9 ist als Negativprofil für das finale Gewindeprofil 5b zu verstehen. Somit weist das Walzprofil 9 eine umlaufende Walzprofilgeometrie 10 auf, die korrespondierend zu einer in den Figuren 5a bis 5b gezeigten zweiten Laufbahngeometrie 6b des finalen Gewindeprofils 5b ausgebildet ist.

Gemäß Figur 4a ist die Walzprofilgeometrie 10 halbkreisförmig ausgebildet. Dies bedeutet, dass die zweite Laufbahngeometrie 6b des finalen Gewindeprofils 5b während des Abwälzens des Walzprofils 9 entlang des vorläufigen Gewindeprofils 5a ebenfalls halbkreisförmig ausgebildet wird. Mithin weist die Walzprofilgeometrie 10 des Wälzprofils 9 einen Mittelpunkt 13a auf, der mit einem radialen Abstand 14 beabstandet zur Längsachse L1 des Walzprofils 9 angeordnet ist, wobei die Walzprofilgeometrie 10 ausgehend von dem Mittelpunkt 13a mit einem Radius R1 halbkreisförmig ausgebildet ist.

Alternativ dazu ist die Walzprofilgeometrie 10 gemäß Figur 4b teilweise in Form eines gotischen Profils ausgebildet. Dies bedeutet wiederum, dass die zweite Laufbahngeometrie 6b des finalen Gewindeprofils 5b während des Abwälzens des Walzprofils 9 entlang des vorläufigen Gewindeprofils 5a analog dazu ebenfalls in Form eines gotischen Profils ausgebildet wird. Dabei weist die Walzprofilgeometrie 10 des Wälzprofils 9 einen ersten Mittelpunkt 13a und einen zweiten Mittelpunkt 13b auf, die jeweils mit einem gleichen radialen Abstand 14 beabstandet zur Längsachse L1 des Walzprofils 9 angeordnet sind und in axialer Richtung des Walzprofils 9 beabstandet zueinander ausgebildet sind. Ausgehend vom jeweiligen Mittelpunkt 13a, 13b ist die Walzprofilgeometrie 10 mit einem jeweiligen Radius R1, R2 ausgebildet. Über die Radien R1, R2 sowie den axialen Abstand 15 zwischen den Mittelpunkten 13a, 13b wird die Walzprofilgeometrie 10 eingestellt.

Gemäß den Figuren 5a, 5b und 5c sind drei mögliche Ausführungsformen des Gewindeprofils der Kugellaufbahn 4 der Kugelgewindemutter 1 dargestellt. Die durchgezogenen Linien zeigen eine erste Laufbahngeometrie 6a des vorläufigen Gewindeprofils 5a und die gestrichelten Linien zeigen eine zweite Laufbahngeometrie 6b des finalen Gewindeprofils 5b, die durch Abwälzen des Walzprofils 9 entlang des vorläufigen Gewindeprofils 5a erzeugt wird.

Durch das Abrollen des Walzprofils 9 entlang des vorläufigen Gewindeprofils 5a werden insbesondere Rauhigkeitsspitzen der Kugellaufbahn 4 eingeglättet, wodurch plastische Verformungen an der Oberfläche der Kugellaufbahn 4 erfolgen. Dabei wird die erste Laufbahngeometrie 6a bis hin zur zweiten Laufbahngeometrie 6b radial aufgeweitet. Anders gesagt weist das Walzprofil 9 einen größeren Außendurchmesser auf als der Innendurchmesser des vorläufigen Gewindeprofils 5a. Ferner ist, wie vorliegend anhand der Figuren 5a bis 5c dargestellt, denkbar, dass die erste und zweite Laufbahngeometrie 6a, 6b unterschiedliche Formen aufweisen. Mit anderen Worten ist zwischen den beiden Laufbahngeometrien 6a, 6b eine Querschnittsfläche, die während des Abrollens des Walzprofils 9 entlang des vorläufigen Gewindeprofils 5a plastisch verformt wird, sodass es zu Verfestigungen an der Oberfläche der Kugellaufbahn 4 bzw. dem finalen Gewindeprofil 5b kommt.

Dieser radiale Abstand zwischen den Laufbahngeometrien 6a, 6b wird als Einglätttiefe 16 bezeichnet. Nach Figur 5a ist die Einglätttiefe 16 konstant ausgebildet. Mit anderen Worten erstreckt sich die Einglätttiefe 16 mit einer konstanten Dicke über den halbkreisförmigen Umfang der Kugellaufbahn 4.

In Figur 5b ist die Einglätttiefe 16 variabel ausgeführt, wobei die Einglätttiefe 16 ausgehend vom Scheitel der Kugellaufbahn 4 zur Innenumfangsfläche 3 der Kugelgewindemutter 1 hin zunimmt. Mit anderen Worten wird bei der Ausbildung des finalen Gewindeprofils 5b an den Seiten der Kugellaufbahn 4 mehr Material verformt als am Scheitel, wodurch insbesondere im Randbereich der Kugellaufbahn 4 höhere Festigkeiten der Kugellaufbahn 4 erreicht werden.

Nach Figur 5c ist die Einglätttiefe 16 teilweise konstant und teilweise variabel ausgeführt, wobei die Einglätttiefe 16 in einem Kontaktbereich 17 der Kugellaufbahn 4 konstant, also mit einer gleichmäßigen Einglätttiefe16 versehen ist, und daran anschließend zur Innenumfangsfläche 3 der Kugelgewindemutter 1 hin konstant abnimmt.

### Bezugszeichenliste

- 1: Kugelgewindemutter
- 2: Werkstück
- 3: Innenumfangsfläche
- 4: Kugellaufbahn
- 5a: vorläufiges Gewindeprofil
- 5b: finales Gewindeprofil
- 6a: erste Laufbahngeometrie
- 6b: zweite Laufbahngeometrie
- 7: Werkzeugschaft
- 8: Werkzeugkopf
- 9: Walzprofil
- 10: Walzprofilgeometrie
- 11: erste Verlagerungsrichtung
- 12: zweite Verlagerungsrichtung
- 13a, 13b: Mittelpunkt
- 14: Abstand zur Längsachse des Walzprofils
- 15: axialer Abstand
- 16: Einglätttiefe

- A: Rotationsachse
- L1: Längsachse des Walzprofils
- L2: Längsachse des Werkzeugschaftes
- R1: erster Radius der Walzprofilgeometrie
- R2: zweiter Radius der Walzprofilgeometrie
- W: Gewindesteigung des Gewindeprofils
- W1: Winkel des Werkzeugkopfes
- W2: Winkel des Werkzeugschaftes

## Patentansprüche

1. Verfahren zur Herstellung einer Kugellaufbahn (4) an einer Innenumfangsfläche (3) eines Werkstücks (2), wobei am Werkstück (2) ein vorläufiges Gewindeprofil (5a) mit einer ersten Laufbahngeometrie (6a) mittels eines spanenden Fertigungsverfahrens ausgebildet wird, wobei das vorläufige Gewindeprofil (5a) zur Nachbearbeitung und Ausbildung eines finalen Gewindeprofils (5b) vorgesehen ist, wobei das Werkstück (2) nach der spanenden Bearbeitung in ein Gewindewalzwerkzeug mit einem Werkzeugschaft (7) eingespannt wird, wobei der Werkzeugschaft (7) eine Längsachse (L2) aufweist und an einem freien Ende des Werkzeugschaftes (7) ein Werkzeugkopf (8) mit einem Walzprofil (9) ausgebildet ist, wobei das Werkstück (2) um eine Rotationsachse (A) in eine Drehbewegung versetzt und der Werkzeugschaft (7) entlang der Innenumfangsfläche (3) des Werkstücks (2) longitudinal verlagert und durch das Werkstück (2) hindurch geführt wird, und wobei das Walzprofil (9) des Werkzeugkopfes (8) zur Erzeugung des finalen Gewindeprofils (5b) am Werkstück (2) mit einer zweiten Laufbahngeometrie (6b) am vorläufigen Gewindeprofil (5a) abwälzt, **dadurch gekennzeichnet, dass** das Walzprofil (9) eine die Längsachse (L2) ringförmig umlaufende Walzprofilgeometrie (10) aufweist.

2. Verfahren nach Anspruch 1,
**dadurch gekennzeichnet, dass** das Werkstück (2) nach Entnahme aus dem Gewindewalzwerkzeug gehärtet wird.

3. Verfahren nach einem der vorhergehenden Ansprüche,
**dadurch gekennzeichnet, dass** das vorläufige Gewindeprofil (5a) mit einer Gewindesteigung (W) ausgebildet wird, wobei das Walzprofil (9) bezogen auf die Rotationsachse (A) des Werkstücks (2) analog zur Gewindesteigung (W) geneigt ausgerichtet wird.

4. Verfahren nach einem der Ansprüche 1 bis 3,
**dadurch gekennzeichnet, dass** der Werkzeugschaft (7) parallel zur Rotationsachse (A) des Werkstücks (2) ausgerichtet wird.

5. Verfahren nach einem der Ansprüche 1 bis 3,
**dadurch gekennzeichnet, dass** der Werkzeugschaft (7) bezogen auf die Rotationsachse (A) des Werkstücks (2) geneigt ausgerichtet wird.

6. Verfahren nach einem der vorhergehenden Ansprüche,
**dadurch gekennzeichnet, dass** der Werkzeugschaft (7) mit einer Anpresskraft in Richtung des vorläufigen Gewindeprofils (5a) gedrückt wird.

7. Verfahren nach einem der vorhergehenden Ansprüche,
**dadurch gekennzeichnet, dass** das Walzprofil (9) eine korrespondierend zur zweiten Laufbahngeometrie (6b) ausgebildete Walzprofilgeometrie (10) aufweist, wobei die Walzprofilgeometrie (10) halbkreisförmig oder zumindest teilweise in Form eines gotischen Profils ausgebildet ist, mit dem das finale Gewindeprofil (5b) am Werkstück (2) erzeugt wird.

## Claims

1. A method for producing a ball race (4) on an inner circumferential surface (3) of a workpiece (2), wherein a preliminary thread profile (5a) with a first race geometry (6a) is formed on the workpiece (2) by means of a machining manufacturing process, wherein the preliminary thread profile (5a) is provided for reworking and forming a final thread profile (5b), wherein
the workpiece (2) is clamped in a thread-rolling tool with a tool shank (7) after machining, wherein the tool shank (7) has a longitudinal axis (L2) and a tool head (8) with a rolling profile (9) is formed at a free end of the tool shank (7), wherein the workpiece (2) is set in a rotational movement about an axis of rotation (A) and the tool shank (7) is displaced longitudinally along the inner circumferential surface (3) of the workpiece (2) and guided through the workpiece (2), and wherein the rolling profile (9) of the tool head (8) for producing the final thread profile (5b) on the workpiece (2) rolls with a second race geometry (6b) on the preliminary thread profile (5a), **characterized in that** the rolling profile (9) has a rolling profile geometry (10) running annularly around the longitudinal axis (L2).

2. The method according to claim 1,
**characterized in that** the workpiece (2) is hardened after removal from the thread-rolling tool.

3. The method according to any one of the preceding claims,
**characterized in that** the preliminary thread profile (5a) is formed with a thread pitch (W), wherein the rolling profile (9) is aligned in an inclined manner with respect to the axis of rotation (A) of the workpiece (2) analogously to the thread pitch (W).

4. The method according to any one of claims 1 to 3,
**characterized in that** the tool shank (7) is aligned parallel to the axis of rotation (A) of the workpiece (2).

5. The method according to any one of claims 1 to 3,
**characterized in that** the tool shank (7) is aligned in an inclined manner with respect to the axis of rotation (A) of the workpiece (2).

6. The method according to any one of the preceding claims,
**characterized in that** the tool shank (7) is pressed in the direction of the preliminary thread profile (5a) with a contact pressure.

7. The method according to any one of the preceding claims,
**characterized in that** the rolling profile (9) has a rolling profile geometry (10) corresponding to the second race geometry (6b), wherein the rolling profile geometry (10) is designed to be semicircular or at least partially in the form of a gothic profile, with which the final thread profile (5b) is produced on the workpiece (2).

## Revendications

1. Procédé de préparation d'une piste de roulement à billes (4) sur une surface périphérique intérieure (3) d'une pièce (2), dans lequel un profil de filetage provisoire (5a) ayant une première géométrie de piste de roulement (6a) est formé sur la pièce (2) au moyen d'un procédé de fabrication par enlèvement de copeaux, dans lequel le profil de filetage provisoire (5a) est destiné au post-usinage et à la formation d'un profil de filetage final (5b), dans lequel
la pièce (2) est serrée, après l'usinage par enlèvement de copeaux, dans un outil de filetage par roulage à l'aide d'une tige d'outil (7), dans lequel la tige d'outil (7) présente un axe longitudinal (L2) et sur une extrémité libre de la tige d'outil (7) est formée une tête d'outil (8) dotée d'un profil roulé (9), dans lequel la pièce (2) est animée d'un mouvement de rotation autour d'un axe de rotation (A) et la tige d'outil (7) est déplacée longitudinalement le long de la surface périphérique intérieure (3) de la pièce (2) et guidé à travers la pièce (2), et dans lequel le profil roulé (9) de la tête d'outil (8) roule sur le profil de filetage provisoire (5a) pour produire le profil de filetage final (5b) sur la pièce (2) avec une seconde géométrie de piste de roulement (6b), **caractérisé en ce que** le profil roulé (9) présente une géométrie de profil roulé (10) qui s'étend de manière annulaire autour de l'axe longitudinal (L2).

2. Procédé selon la revendication 1,
**caractérisé en ce que** la pièce (2) est durcie après retrait de l'outil de filetage par roulage.

3. Procédé selon l'une quelconque des revendications précédentes,
**caractérisé en ce que** le profil de filetage provisoire (5a) est formé avec un pas de filetage (W), dans lequel le profil roulé (9) est orienté de manière inclinée par rapport à l'axe de rotation (A) de la pièce (2) de manière analogue au pas de filetage (W).

4. Procédé selon l'une quelconque des revendications 1 à 3,
**caractérisé en ce que** la tige d'outil (7) est orientée parallèlement à l'axe de rotation (A) de la pièce (2).

5. Procédé selon l'une quelconque des revendications 1 à 3,
**caractérisé en ce que** la tige d'outil (7) est orientée de manière inclinée par rapport à l'axe de rotation (A) de la pièce (2).

6. Procédé selon l'une quelconque des revendications précédentes,
**caractérisé en ce que** la tige d'outil (7) est pressée avec une force d'appui en direction du profil de filetage provisoire (5a).

7. Procédé selon l'une quelconque des revendications précédentes,
**caractérisé en ce que** le profil roulé (9) présente une géométrie de profil roulé (10) conçue pour correspondre à la seconde géométrie de piste de roulement (6b), dans lequel la géométrie de profil roulé (10) est semi-circulaire ou au moins partiellement en forme de profil gothique, avec lequel le profil de filetage final (5b) est réalisé sur la pièce (2).
